Europäisches Patentamt

European Patent Office

Office européen des brevets

(11) Veröffentlichungsnummer: **0 084 369**
**B1**

(12)

# EUROPÄISCHE PATENTSCHRIFT

(45) Veröffentlichungstag der Patentschrift :
30.10.85

(21) Anmeldenummer : 83100354.6

(22) Anmeldetag : 18.01.83

(51) Int. Cl.⁴ : **C 04 B 35/58, C 04 B 35/64**

(54) **Dichte Formkörper aus polykristallinem, hexagonalem Bornitrid und Verfahren zu ihrer Herstellung durch isostatisches Heisspressen.**

(30) Priorität : 20.01.82 DE 3201563

(43) Veröffentlichungstag der Anmeldung :
27.07.83 Patentblatt 83/30

(45) Bekanntmachung des Hinweises auf die Patenterteilung : 30.10.85 Patentblatt 85/44

(84) Benannte Vertragsstaaten :
AT BE CH DE FR GB IT LI NL SE

(56) Entgegenhaltungen :
DE-A- 2 259 228
FR-A- 2 200 220
US-A- 3 513 229
CHEMICAL ABSTRACTS, Band 97, Nr. 6, August 1982,
Seite 258, Nr. 43096f, Columbus, Ohio, USA
CHEMICAL ABSTRACTS, Band 74, Nr. 12, 22. März
1971, Seite 201, Nr. 56853a, Columbus, Ohio, USA
M. BRICKWAY et al.: "Development and evaluation of
hot isostatically compacted boron nitride"
Die Akte enthält technische Angaben, die nach dem
Eingang der Anmeldung eingereicht wurden und die
nicht in dieser Patentschrift enthalten sind.

(73) Patentinhaber : Elektroschmelzwerk Kempten GmbH
Herzog-Wilhelm-Strasse 16
D-8000 München 22 (DE)

(72) Erfinder : Hunold, Klaus, Dr. Dipl.-Ing.
Hirschdorfer Weg 3
D-8960 Kempten (DE)
Erfinder : Lipp, Alfred, Dr. Dipl.-Chem.
Bürgermeister-Singer-Strasse 15
D-8939 Bad Wörishofen (DE)
Erfinder : Reinmuth, Klaus, Dr. Dipl.-Chem.
An der Halde 21
D-8968 Durach (DE)

**Beschreibung**

Formkörper aus polykristallinem, hexagonalem Bornitrid sind bekannt. Sie zeichnen sich durch eine Kombination wertvoller Eigenschaften aus, wie hohe thermische Leitfähigkeit, geringe elektrische Leitfähigkeit (Isolator), gute mechanische Bearbeitbarkeit, hohe Korrosions- und Temperaturwechselbeständigkeit, sowie schlechte Benetzbarkeit durch geschmolzene Metalle, wie Aluminium, Kupfer und Zink, Nicht-Metalle, wie Silicium und Bor und nichtmetallische Verbindungen, wie Glas und Kryolith. Aufgrund dieser Eigenschaften sind sie beispielsweise als Werkstoffe in der Elektronik, sowie als Tiegelmaterial von Bedeutung.

Die Herstellung derartiger Formkörper ist jedoch mit Schwierigkeiten und/oder mit hohem Aufwand verbunden, denn es ist ebenfalls bekannt, daß sich reines Bornitridpulver ohne Mitverwendung von Sinterhilfsmitteln praktisch nicht hochverdichten läßt, worunter zu verstehen ist, daß die theoretisch mögliche Dichte des reinen Bornitrids von 2,27 g/cm³ nicht erreicht wird.

Die besten bisher bekannten Ergebnisse in Bezug auf eine möglichst hohe Verdichtung werden durch Heißpressen bei Temperaturen von 1 700° bis 2 200 °C unter einem Stempeldruck von ca. 10 bis 30 MPa erzielt, wobei sich Boroxid enthaltende Bonrnitridpulver besonders bewährt haben. Die so erhaltenen Formkörper zeigen aber aufgrund des Boroxidgehalts schlechte Hochtemperatureigenschaften.

Zur Verbesserung dieser Eigenschaften kann der Sauerstoffgehalt in den durch Heißpressen hergestellten Bonrnitridformkörpern durch Auswaschen des Boroxids und anschließendem Nachsintern bei 1 600° bis 2 100 °C erniedrigt werden (vgl. US-PSS-3 660 027 und 3 734 997, die der DE-AS-2 021 952 entsprechen). Dieses Verfahren ist jedoch mit ungewöhnlich hohem Aufwand verbunden und zudem für die Behandlung größerer Formkörper nicht geeignet, da bereits für das Auswaschen relativ kleiner Formkörper bis zu 44 Tage benötigt werden.

Darüberhinaus zeigen Formkörper, die aus hexagonalem Bornitridpulver, unabhängig von der Art der mitverwendeten Sinterhilfsmittel durch Heißpressen hergestellt worden sind, aufgrund der biaxialen Druckanwendung bei den hohen Temperaturen ein gerichtetes Kornwachstum und damit ein anisotropes Mikrogefüge, sodaß ihre Eigenschaften richtungsabhängig sind. Die Ausbildung der Anisotropie ist um so stärker, je höher der Verdichtungsgrad ist.

Es ist ferner allgemein bekannt, daß außer dem üblichen Heißpressen mit biaxialer Druckanwendung auch das sogenannte isostatische Heißpressen mit allseitiger Druckanwendung durch ein inertes Gas als Druckübertragungsmedium durchgeführt werden kann. Hierbei ist es notwendig, das zu verdichtende Pulver oder aus diesem vorgeformte Körper mit offener Porosität, das heißt mit zur Oberfläche offenen Poren, mit einer gasdichten Hülle zu versehen um zu verhindern, daß das als Druckübertragungsmedium verwendete Gas eindringt und die Verdichtung stört.

Für Bornitridpulver mit einem Überschuß an Bor oder Stickstoff sollen als Hüllen solche aus Titan oder Zirkon geeignet sein, da die üblicherweise beim isostatischen Heißpressen verwendeten Hüllen aus Eisen, Chrom oder Nickel mit dem Pulvermaterial, Bor oder Stickstoff, Verbindungen mit bedeutend niedrigerem Schmelzpunkt als das eigentliche Hüllmaterial bilden, wodurch die Hülle undicht wird und das Druckübertragungsmedium eindringt. Bornitridpulver der genannten Art sollen so bei Temperaturen von 1 200° bis 1 600 °C unter einem Druck von 20 bis 300 MPa dem heißisostatischen Preßvorgang unterzogen werden können, wobei jedoch ausdrücklich darauf hingewiesen wird, daß unter diesen Bedingungen keine Bornitridkörper mit hoher Dichte erhalten wurden (vgl. US-PS-4 007 251).

Anstelle der Metallhüllen können vorgeformte Körper auch in vorgefertigte Glashüllen eingesetzt und der Raum zwischen Hülle und Körper zusätzlich mit einem Glaspulver ausgefüllt werden, das eine höhere Erweichungstemperatur hat als die Hülle selbst (vgl. GB-PS-1 529 966, die der DE-PS-2 601 294 entspricht).

Aus dem technischen Bericht « Development and Evaluation of Hot Isostatically Compacted Boron Nitride » von M.C. Brockway et al, AD-709 620 v. Juli 1970, Battelle Memorial Institute, Columbus Laboratories, sind ferner einige Versuche bekannt geworden, die sich mit der Herstellung von bindemittelfreien, polykristallinen Bornitridkörpern befassen. Hierbei wurden handelsübliche BN-Pulver verschiedenen Reinigungsverfahren unterzogen, dann kaltisostatisch vorverdichtet und anschließend in Tantalbehältern, die durch Elektronenstrahlschweißung vakuumdicht verschlossen worden waren, bei Temperaturen von 1 650 °C bis 2 480 °C und Drücken von 207 MPa (30 000 p.s.i.) bzw. 103 MPa (15 000 p.s.i.) 1 bis 3 Std. heißisostatisch verdichtet. Aus der Besprechung der Versuchsergebnisse ist ersichtlich, daß die erreichten Dichten in der Größenordnung von handelsüblichen, uniaxial heißgepressten BN-Körpern lagen. Die Daten zeigten keinen allgemeinen Anstieg der Dichte mit der Temperatur, was vermutlich auf ein Kornwachstum bei hohen Temperaturen zurückzuführen ist. Es wurde auch festgestellt, daß durch Verbesserung der Pulverreinheit keine Verbesserung der Eigenschaften, wie Dichte und mechanische Festigkeit erzielt werden konnte, obwohl der Sauerstoffgehalt niedriger war als derjenige der besten handelsüblichen uniaxial heißgepressten BN-Körper, der üblicherweise bei etwa 1 % liegt. Darüberhinaus wurde festgestellt, daß die Körper nicht vollkommen isotrop waren, d. h. daß offensichtlich trotz der allseitigen Druckanwendung ein gerichtetes Kornwachstum nicht unterdrückt werden konnte.

Einfügung in die Beschreibung auf Seite 4 nach dem ersten Absatz im Anschluß an Zeile 11 :

Aus der SE-A-422 322 ist ferner ein Formkörper aus polykristallinem hexagonalem Bornitrid mit einer Dichte von über 98 % TD bekannt, der aus einem relativ grobkörnigen Bornitridpulver mit sehr geringem Sauerstoffgehalt, entsprechend einem Gehalt an freiem Boroxid von weniger als 1 Gew.-% durch isostatisches Heißpressen bei einer Temperatur von 1 700 °C bis 1 800 °C hergestellt worden ist.

Es wurde jedoch nachgewiesen, daß ein Bornitridformkörper, der aus feinkörnigem Bornitridpulver mit einem Gehalt an freiem Boroxid von weniger als 1 Gew.-% durch isostatisches Heißpressen bei einer Temperatur von 1 700 °C hergestellt worden ist, kein homogenes, feinkristallines Mikrogefüge aufwies, obwohl er eine Dichte von > 95 % TD hatte. Das Mikrogefüge war vielmehr inhomogen und teilweise grobkristallin. Nur ein homogenes und feinkristallines Mikrogefüge garantiert aber, daß das Material isotrop ist, d. h. daß seine Eigenschaften weitgehend richtungsunabhängig sind.

Die entscheidenden Parameter, die für die Herstellung von BN-Formkörpern mit Hilfe des isostatischen Heißpressvorgangs notwendig sind, um eine Verbesserung der Eigenschaften zu garantieren, nämlich hohe Dichte in Verbindung mit einem vollkommen homogenen, isotropen Mikrogefüge, wurden demnach nicht erkannt.

Es stellt sich somit die Aufgabe, dichte Formkörper aus Bornitrid mit verbesserten Eigenschaften zur Verführung zu stellen, die durch Verdichten von reinem Bornitridpulver ohne Mitverwendung von Sinterhilfsmitteln auf einfache Weise und ohne aufwendige Nachbehandlung hergestellt worden sind.

Die erfindungsgemäßen Formkörper mit einer Dichte von mindestens 95 % der theoretisch möglichen Dichte (im folgenden als % TD abgekürzt) bestehen aus polykristallinem, hexagonalem Bornitrid in Form eines homogenen, isotropen Mikrogefüges, die aus reinem Bornitridpulver mit einem Boroxidgehalt von höchstens 1,0 Gewichtsprozent, durch isostatisches Heißpressen in einer vakuumdicht geschlossenen Hülle bei einer Temperatur von 1 200° bis 1 500 °C unter einem Druck von 50 bis 300 MPa im Hochdruckautoklaven unter Verwendung eines inerten Gases als Druckübertragungsmedium hergestellt worden sind.

Für die Herstellung der erfindungsgemäßen Formkörper werden als Ausgangsmaterial vorteilhaft feine Pulver aus hexagonalem Bornitrid mit einer spezifischen Oberfläche im Bereich von 5 bis 30 $m^2/g$ (gemessen nach der BET-Methode), die als Maß für die Teilchengröße dient, und mit einer Reinheit von mindestens 98,5 Gewichtsprozent verwendet, worunter zu verstehen ist, daß die Analysensumme von Bor und Stickstoff mindestens 98,5 Gewichtsprozent beträgt. Der Gehalt an freiem Boroxid in diesen Pulvern beträgt definitionsgemäß nicht mehr als 1,0 Gewichtsprozent. Metallische Verunreinigungen können insgesamt bis zu 0,2 Gewichtsprozent toleriert werden. Der noch verbleibende Differenzbetrag bis zu 100 Gewichtsprozent verteilt sich vorwiegend auf Sauerstoff in Form von anhaftenden Boroxinitriden.

Handelsübliche Bornitridpulver beliebiger Herkunft, die durch übliche bekannte Maßnahmen, wie Erhitzen auf etwa 1 800 °C und anschließendem Auswaschen mit Methanol oder Wasser gereinigt worden sind, können verwendet werden.

Für die Herstellung der erfindungsgemäßen Formkörper kann das reine Bornitridpulver *per se* in vorgefertigte Hüllen oder Kapseln von beliebiger Form eingefüllt und durch Vibration verdichtet werden. Aufgrund der geringen Schüttdichte des Bornitridpulvers wird dieses jedoch vorteilhaft in granulierter Form eingesetzt, wobei gegebenenfalls geringe Mengen eines temporären Bindemittels, wie Polyvinylalkohol mitverwendet werden können. Anschließend werden die Hüllen samt Inhalt evakuiert und dann gasdicht verschlossen.

Das Bornitridpulver kann jedoch auch zu Körpern mit offener Porosität, das heißt mit zur Oberfläche offenen Poren vorgeformt und dann mit einer gasdichten Hülle versehen werden. Die Formgebung kann durch übliche bekannte Maßnahmen, beispielsweise durch Gesenkpressen oder isostatisches Pressen vorgenommen werden. Die Mitverwendung eines temporären Bindemittels ist hierbei in der Regel nicht erforderlich. Gegebenenfalls können jedoch geringe Mengen eines temporären Bindemittels mitverwendet werden. Beispiele für temporäre Bindemittel sind Polyvinylalkohol und Campher die in Mengen bis zu höchstens 3 Gewichtsprozent, bezogen auf das Gewicht des Bornitridpulvers eingesetzt werden können. Entscheidend ist hierbei, daß sich die Bindemittel bei Temperaturen < 1 000 °C praktisch rückstandslos zersetzen, bzw. in so geringer Konzentration vorliegen, daß der Zersetzungsrückstand in Form von freiem Kohlenstoff 0,1 Gewichtsprozent, bezogen auf das Bornitrid, nicht überschreitet. Größere Mengen an freiem Kohlenstoff stören zwar nicht den Verdichtungsvorgang beim anschließenden isostatischen Heißpressen, können aber eine Verfärbung des Endproduktes hervorrufen, das üblicherweise weiß ist, wie aus der bekannten Bezeichnung « weißer Graphit » hervorgeht.

Nach der Formgebung sollten die Grünkörper eine theoretische Dichte von mindestens 50 %, vorzugsweise 60 % TD aufweisen. Anschließend werden die Grünkörper vorteilhaft einer thermischen Behandlung durch Erhitzen auf 300° bis 1 000 °C, vorzugsweise 400° bis 700 °C unterzogen, bevor sie mit der gasdichten Hülle versehen werden, um sicher zu stellen, daß bei der heißisostatischen Verdichtung keine gasförmigen Zersetzungsprodukte aus den Bindemitteln oder Wasserdampf den Verdichtungsvorgang stören oder die Hülle beschädigen.

Als Material für die gasdicht verschließbaren Hüllen, das bei der für Bornitrid erforderlichen, relativ niedrigen Verdichtungstemperatur von 1 200° bis 1 500 °C plastisch verformbar sein muß, können Metalle, wie Eisen, Chrom oder Nickel, Metall-Legierungen, wie Stahl, sowie in diesem Temperaturbereich plastisch verformbare Gläser oder glasähnliche Massen verwendet werden.

Bei Einsatz des Bornitridpulvers *per se* sind vorgefertigte Hüllen oder Kapseln erforderlich, di auch bei Einsatz der vorgeformten Körper Verwendung finden können, wobei sich Stahlhüllen, die einfach zu handhaben und preisgünstig verfügbar sind, besonders bewährt haben. Bei vorgeformten Körpern kann die gasdichte Hülle jedoch auch durch direkte Beschichtung erzeugt werden, beispielsweise durch stromlose Naßabscheidung einer Metallschicht oder durch Auftragen einer glasartigen Masse, die anschließend unter Bildung der gasdichten Hülle geschmolzen oder gesintert wird.

Die gehüllten Proben werden in den Hochdruckautoklaven eingebracht und auf die erforderliche Verdichtungstemperatur von mindestens 1 200 °C erhitzt. Hierbei ist es vorteilhaft, Druck und Temperatur getrennt zu regeln, das heißt den Gasdruck erst dann zu erhöhen, wenn das Hüllmaterial anfängt sich unter dem Druck plastisch zu verformen. Als inerte Gase für die Druckübertragung werden vorzugsweise Argon oder Stickstoff verwendet. Der angewendete Druck liegt vorzugsweise im Bereich von 100 bis 200 MPa, der unter langsamer Erhöhung bei der jeweils angewendeten Endtemperatur erreicht wird, die vorzugsweise mindestens 1 250 °C beträgt. Die jeweils optimale Temperatur ist abhängig von der Feinheit und Reinheit des verwendeten Bornitridpulvers und sollte nicht überschritten werden, um sicher zu stellen, daß gegebenenfalls vorhandene Boroxinitride nicht unter Bildung von Boroxid zersetzt werden.

Nach Erniedrigung von Druck und Temperatur werden die abgekühlten Körper aus dem Hochdruckautoklaven entnommen und von den Hüllen befreit, beispielsweise durch Abdrehen der Metallhüllen oder durch Sandstrahlbehandlung der Glashüllen.

Die so hergestellten Formkörper haben in Abhängigkeit von dem angewendeten Druck, der Temperatur und der Haltezeit diesen Bedingungen eine theoretisch mögliche Dichte von mindestens 95 %, vorzugsweise von mindestens 99 %. Aufgrund der allseitigen Druckanwendung in Verbindung mit der relativ niedrigen Preßtemperatur haben sie auch bei hohem Verdichtungsgrad ein homogenes, isotropes Mikrogefüge, sodaß ihre Eigenschaften nicht mehr richtungsabhängig, sondern in allen Richtungen gleichbleibend sind. Ein Kornwachstum war unter den gegebenen Bedingungen nicht zu beobachten, das heißt, daß die Korngrössen im Mikrogefüge des fertigen Formkörpers praktisch den Teilchengrößen des eingesetzten Bornitridpulvers entsprechen. Für die zur Charakterisierung der mechanischen Festigkeit herangezogene Biegebruchfestigkeit werden Werte von > 50 N/mm² erreicht, die nicht nur in allen Richtungen gleich, sondern auch bei höhreren Temperaturen unverändert bleiben. Die Formkörper zeigen eine hohe Wärmeleitfähigkeit und einen niedrigen E-Modul und sind daher sehr thermoschockbeständig. Die Richtungsunabhängigkeit der Eigenschaften wird durch praktisch identische Meßdaten von Proben bestätigt, die aus dem heißisostatisch verdichteten Formkörpern in verschiedenen Richtungen entnommen wurden.

Die erfindungsgemäßen Formkörper aus polykristallinem hexagonalem Bornitrid haben demnach nicht nur bessere Eigenschaften als solche, die unter Mitverwendung von Sinterhilfsmitteln nach dem üblichen Heißpressverfahren und/oder aufwendiger Nachbearbeitung hergestellt worden sind, sondern auch als solche, die ohne Mitverwendung von Sinterhilfsmitteln durch isostatisches Heißpressen bei relativ hohen Preßtemperaturen hergestellt worden sind.

Sie können auch auf einfachere Weise hergestellt werden, da Form und Größe der Körper weder durch die hinlänglich bekannten eingeschränkten Formgebungsmöglichkeiten in einer üblichen, mittels Stempeldruck arbeitenden Heißpresse begrenzt sind, noch durch die aufwendige Hülltechnik, die beim isostatischen Heißpressen bei relativ hohen Preßtemperaturen den Einsatz von Tantalbehältern erforderlich macht, die durch Elektronenstrahlschweißung gasdicht verschlossen werden müssen.

Die erfindungsgemäßen Formkörper können beispielsweise in einem Hochdruckautoklaven mit einem Umsatzvolumen von > 1 m³ als relativ große Körper in Blockform unter Verwendung einfacher Stahlhüllen hergestellt werden, deren gasdichter Verschluß einfach zu bewerkstelligen ist, ohne daß hierzu ein Elektronenstrahlschweißgerät benötigt wird. Diese großen Körper können dann völlig richtungsunabhängig zu kleineren Körpern von beliebiger Form mechanisch bearbeitet werden.

Obwohl es bekannt ist, daß mit Hilfe des isostatischen Heißpressverfahrens mit einer gasdichten Hülle versehene Körper aus pulverförmigen Werkstoffen verdichtet werden können, muß es als überraschend bewertet werden, daß dies im Falle des Bornitrids nunmehr ohne die Mitverwendung von Sinterhilfsmitteln gelingt und zwar bei Temperaturen von < 1 500 °C und selbst unter Verwendung einfacher Stahlhüllen, was bisher offensichtlich nicht für möglich gehalten worden war.

Die Erfindung wird anhand der folgenden Beispiele näher erläutert.

## Beispiel 1

Ein Bornitridpulver mit folgender Analyse

|  | Gew.% |
|---|---|
| B | 43,3 |
| $N_2$ | 55,7 |
| $O_2$ gesamt | 0,8 |
| $B_2O_3$ | 0,07 |
| Ca | < 0,5 |

4

und mit einer spezifischen Oberfläche von 14 m²/g wurde unter Verwendung von 0,3 Gew.-% Polyvinylalkohol granuliert und auf einem Vibriertisch in eine Stahlkapsel (St 37) von 120 mm Durchmesser und 150 mm Höhe eingerüttelt. Die Rütteldichte des Granulates betrug etwa 0,8 g/cm³. Dann wurde der mit einem Absaugstutzen versehene Deckel auf die Kapsel aufgeschweißt und diese anschließend in einem Kammerofen auf 550 °C aufgeheizt. Gleichzeitig wurde die Kapsel mit einer Vakuumpumpe über dem Absaugstutzen evakuiert. Über die Vakuumanzeige konnte das Ende des Entgasungsvorganges abgelesen werden. Mit einer Hydraulikzange wurde der Absaugstutzen vakuumdicht zugequetscht, oberhalb der Quetschstelle abgetrennt und mit einer Schweißnaht zusätzlich gesichert. Die mit Bornitrid gefüllte, evakuierte Kapsel wurde in die Heißisostatpresse eingebracht und bei 1 450 °C unter einem Argongasdruck von 200 MPa und einer Haltezeit von 180 min verdichtet.

Nach dem Abkühlen wurde die Stahlkapsel durch Aufschneiden und Abwickeln vom Bornitridzylinder entfernt. Die Dichte des Formkörpers betrug 2,24 g/cm³ (entspricht 99,1 % TD, bezogen auf die theoretisch mögliche Dichte des eingesetzten Pulvers von 2,26 g/cm³). Das Gefüge war feinkristallin. Eine Kornvergrößerung war gegenüber dem Ausgangspulver nicht zu erkennen.

Die folgenden Eigenschaften wurden unter Verwendung von Probekörpern bestimmt, die in axialer, bzw. in radialer Richtung aus dem Bornitridzylinder herausgeschnitten worden waren. Die Ergebnisse sind in Tabelle 1 zusammengestellt :

Tabelle 1

| Eigenschaften | axial | radial | Faktor axial/radial |
|---|---|---|---|
| Biegefestigkeit in $N/mm^2$ | 74,5 | 73,3 | 1,016 |
| Elastizitätsmodul in $N/mm^2$ | 62 400 | 64 700 | 0,964 |
| Thermische Ausdehnung in $K^{-1}$ (25 – 1000°C) | $2,92 \cdot 10^{-6}$ | $2,78 \cdot 10^{-6}$ | 1,050 |
| Knoop-Härte HK 100 | 54 | 52 | 1,038 |
| HK 25 | 62 | 61 | 1,016 |
| Wärmeleitfähigkeit in W/mk 300 K | 74 | 72 | 1,027 |
| 600 K | 52 | 51 | 1,019 |
| 1000 K | 39 | 39 | 1,000 |

Die Biegefestigkeit wurde nach der 4-Punkt-Methode (unterer Auflagenabstand 30 mm, oberer Auflagenabstand 15 mm) an Proben der Abmessung 2 × 4 × 34 mm bestimmt.

Die Knoop-Härte wurde unter einer Last von 0,98 N (HK 100) und 0,245 N (HK 25) bestimmt. Die Werte sind bezogen auf daN/mm².

Wie aus den praktisch identischen Meßdaten für die in axialer, bzw. radialer Richtung entnommenen Proben ersichtlich, waren die Eigenschaften richtungsunabhängig.

Die folgenden Eigenschaften wurden unabhängig von der Richtung bestimmt. Die Ergebnisse sind in Tabelle 2 zusammengestellt :

Tabelle 2

| | |
|---|---|
| Druckfestigkeit in $N/mm^2$ | 297,5 |
| Verlustwinkel $\tan \delta$ | $3 \times 10^{-4}$ |
| (Mittelwert aus 20 Proben bei 100 kHz) | |
| Dielektrizitätskonstante $\varepsilon$ | 4,90 |
| Elektr. Widerstand in ohm x cm | $2,2 \times 10^{12}$ |

Der Verlustwinkel tan δ wurde bei einer Prüffrequenz von 100 kHz bestimmt ; Vergleichsmessungen von 10 kHz bis 10 MHz ergaben keine meßbaren Unterschiede.

Die Dielektrizitätskonstante ε wurde aus der Kapazität errechnet, die ebenfalls bei einer Prüffrequenz von 100 kHz bestimmt wurde.

## Beispiel 2

Ein Bornitridpulver mit folgender Analyse

|  | Gew.-% |
|---|---|
| B | 43,2 |
| $N_2$ | 55,4 |
| $O_2$ gesamt | 1,3 |
| $B_2O_3$ | 0,9 |
| Ca | < 0,05 |

und mit einer spezifischen Oberfläche von 25 $m^2/g$ wurde in einer Polyvinylchlorid-Hülle bei 400 MPa Flüssigkeitsdruck ohne Preßhilfsmittel isostatisch zu einem Grünkörper von 230 mm Durchmesser und 300 mm Höhe verpreßt. Die Dichte des Grünkörpers betrug 1,76 $g/cm^3$ (entspricht 79 % TD). Der Grünkörper wurde in eine angepaßte Stahlkapsel (St 37) eingebracht und der mit dem Absaugstutzen versehene Deckel aufgeschweißt. Das Aufheizen und Verschließen der Kapsel wurde wie in Beispiel 1 beschrieben durchgeführt. Diese gehüllte Probe wurde bei 1 400 °C unter einem Argondruck von 150 MPa und einer Haltezeit von 120 min heißisostatisch verdichtet. Die Hülle wurde nach dem Verdichten durch Aufschneiden und Abwickeln entfernt. Die Dichte des erhaltenen Formkörpers betrug 2,21 $g/cm^3$ (entspricht 99,1 % TD, bezogen auf die theoretisch mögliche Dichte des eingesetzten Pulvers von 2,23 $g/cm^3$). Das Gefüge war feinkristallin.

## Beispiel 3

Das Bornitridpulver aus Beispiel 2 wurde kaltisostatisch zu einem Zylinder von 60 mm Durchmesser und 120 mm Höhe verpreßt und in eine Kieselglaskapsel eingebracht. Kaltpreßdruck, Preßlingsdichte und Aufheizprogramm entsprachen den in Beispiel 2 angegebenen Bedingungen. Nach der Entgasung wurde der Absaugstutzen vakuumdicht zugeschweißt. Die glasgehüllte Probe wurde bei 1 500 °C, 200 MPa Argondruck und 180 min Haltezeit heißisostatisch verdichtet. Nach dem Verdichten wurde die Glashülle abgeschlagen. Die Dichte des erhaltenen Formkörpers betrug 2,23 $g/cm^3$ (entspricht 100 % TD). Das Gefüge war feinkristallin.

**Patentansprüche**

1. Formkörper mit einer Dichte von mindestens 95 % der theoretisch möglichen Dichte, bestehend aus polykristallinem, hexagonalem Bornitrid in Form eines homogenen, isotropen Mikrogefüges, die aus reinem Bornitridpulver mit einem Gehalt an freiem Boroxid von höchstens 1,0 Gew.-%, durch isostatisches Heißpressen in einer vakuumdicht geschlossenen Hülle bei einer Temperatur von 1 200° bis 1 500 °C unter einem Druck von 50 bis 300 MPa in Hochdruckautoklaven unter Verwendung eines inerten Gases als Druckübertragungsmedium hergestellt worden sind.

2. Formkörper nach Anspruch 1, die unter Verwendung eines Bornitridpulvers aus

mindestens 98,5 Gew.-% B + N,
bis zu 1,0 Gew.-% $B_2O_3$,
bis zu 0,2 Gew.-% metallischen Verunreinigungen insgesamt,

Rest : Sauerstoff in Form von anhaftenden Boroxinitriden, mit einer spezifischen Oberfläche im Bereich von 5 bis 30 $m^2/g$, gemessen nach der BET-Methode, hergestellt worden sind.

3. Verfahren zur Herstellung der Formkörper nach Anspruch 1 und 2 durch isostatisches Heißpressen im Hochdruckautoklaven unter Verwendung eines inerten Gases als Druckübertragungsmedium, dadurch gekennzeichnet, daß das Bornitridpulver in vorgefertigte Hüllen eingefüllt und durch Vibration verdichtet wird, anschließend die Hüllen samt Inhalt vakuumdicht verschlossen und die gehüllten Proben im Hochdruckautoklaven auf 1 200° bis 1 500 °C unter langsamer Erhöhung des Gasdrucks auf 50 bis 300 MPa bis zur Bildung der dichten Formkörper erhitzt, nach dem Abkühlen aus dem Hochdruckautoklaven entnommen und von den Hüllen befreit werden.

4. Verfahren zur Herstellung der Formkörper nach Anspruch 1 und 2 durch isostatisches Heißpressen im Hochdruckautoklaven unter Verwendung eines inerten Gases als Druckübertragungsmedium, dadurch gekennzeichnet, daß das Bornitridpulver unter Formgebung zu Körpern mit zur Oberfläche offenen Poren vorgeformt und diese vorgeformten Körper mit einer Dichte von mindestens 50 % der theoretisch möglichen Dichte des Bornitrids in vorgefertigte Hüllen eingesetzt oder mit einem, eine vakuumdichte Hülle bildenden Material beschichtet werden, die Hüllen vakuumdicht verschlossen und die gehüllten Proben im Hochdruckautoklaven auf 1 200° bis 1 500 °C unter langsamer Erhöhung des Gasdrucks auf 50 bis 300 MPa bis zur Bildung der dichten Formkörper erhitzt, nach dem Abkühlen aus dem Hochdruckautoklaven entnommen und von den Hüllen befreit werden.

5. Verfahren nach Anspruch 3 und 4, dadurch gekennzeichnet, daß als vorgefertigte Hüllen solche aus Stahl verwendet werden.


## Claims

1. Shaped articles having a density of at least 95 % of the theoretically possible density, which consist of polycrystalline hexagonal boron nitride in the form of a homogenous isotropic microstructure and which have been manufactured from pure boron nitride powder having a free boric oxide content of not more than 1.0 % by weight by isostatic hot-pressing in a vacuum-tight sealed casing at a temperature of from 1 200 to 1 500 °C under a pressure of from 50 to 300 MPa in a high-pressure autoclave using an inert gas as pressure-transfer medium.

2. Shaped articles according to claim 1 which have been manufactured using a boron nitride powder consisting

of at least 98.5 % by weight of B + N,

up to 1.0 % by weight of $B_2O_3$,

up to 0.2 % by weight, in total, of metallic impurities, and

remainder : oxygen in the form of adhering boron oxynitrides, and having a specific surface area within the range of from 5 to 30 $m^2/g$, measured according to the BET method.

3. Process for the manufacture of shaped articles according to claims 1 and 2 by isostatic hot-pressing in a high-pressure autoclave using an inert gas as pressure-transfer medium, characterised in that the boron nitride powder is filled into prefabricated casings and consolidated by vibration, and thereafter the casings, together with their contents, are sealed vacuum-tight, the encased samples are heated in a high-pressure autoclave to from 1 200 to 1 500 °C under gradual increase of the gas pressure up to from 50 to 300 MPa until dense shaped articles are formed and, after cooling, the shaped articles are removed from the high-pressure autoclave and freed from the casings.

4. Process for the manufacture of shaped articles according to claims 1 and 2 by isostatic hot-pressing in a high-pressure autoclave using an inert gas as pressure-transfer medium, characterised in that the boron nitride powder is preshaped to form articles having pores open to the surface, the resulting preshaped articles, which have a density of at least 50 % of the theoretically possible density of the boron nitride, are placed in prefabricated casings or coated with a material forming a vacuum-tight casing, the casings are sealed vacuum-tight, the encased samples are heated in a high-pressure autoclave to from 1 200 to 1 500 °C under gradual increase of the gas pressure up to from 50 to 300 MPa until dense shaped articles are formed and, after cooling, the shaped articles are removed from the high-pressure autoclave and freed from the casings.

5. Process according to claims 3 and 4, characterised in that, as prefabricated casings, those consisting of steel are used.


## Revendications

1. Objets moulés ayant une masse volumique représentant au moins 95 % de la masse volumique théoriquement possible, caractérisés en ce qu'ils consistent en du nitrure de bore hexagonal polycristallin sous forme d'une microstructure isotrope homogène, qui ont été préparés à partir d'une poudre de nitrure de bore pur ayant une teneur en oxyde de bore libre d'au maximum 1,0 % en poids, par compression isostatique à chaud dans une enveloppe fermée, étanche au vide, à une température de 1 200° à 1 500 °C sous une pression de 50 à 300 MPa dans des autoclaves à haute pression, avec utilisation d'un gaz inerte comme milieu de transmission de pression.

2. Objets moulés selon la revendication 1, caractérisés en ce qu'ils ont été produits par utilisation d'une poudre de nitrure de bore consistant en :

au moins 98,5 % en poids de B + N,

jusqu'à 1,0 % en poids de $B_2O_3$,

jusqu'à 0,2 % en poids d'impuretés métalliques au total,

le reste étant de l'oxygène sous forme d'oxynitrures de bore adhérents ayant une surface spécifique comprise entre 5 et 30 $m^2/g$, mesurée selon la méthode B.E.T.

3. Procédé de production des objets moulés selon les revendications 1 et 2, par compression isostatique à chaud dans des autoclaves à pression élevée, avec utilisation d'un gaz inerte comme milieu de transmission de pression, caractérisé en ce qu'on introduit la poudre de nitrure de bore dans des enveloppes préformées et on la compacte par vibrations, puis on ferme de façon étanche au vide les enveloppes et leur contenu et l'on chauffe les échantillons enveloppés dans des autoclaves à haute pression jusqu'à 1 200 à 1 500°, avec lente élévation de la pression de gaz jusqu'à 50 à 300 MPa jusqu'à formation des objets moulés denses ou compactés, puis on retire les objets après leur refroidissement de l'autoclave à pression élevée et on en enlève l'enveloppe.

4. Procédé de production d'objets moulés selon les revendications 1 et 2 par compression isostatique à chaud dans un autoclave à haute pression avec utilisation d'un gaz inerte comme milieu de transmission de pression, caractérisé en ce qu'on préforme la poudre de nitrure de bore, avec formage, pour obtenir des corps présentant des pores ouverts jusqu'à la surface et l'on introduit ces corps préformés, ayant une masse volumique représentant au moins 50 % de la masse volumique théoriquement possible du nitrure de bore, dans des enveloppes préformées ou bien on enduit les corps d'une matière formant une enveloppe étanche au vide, on ferme les enveloppes de manière étanche au vide, on ferme les enveloppes de manière étanche au vide et l'on chauffe les échantillons enveloppés, dans un autoclave à haute pression, jusqu'à 1 200° à 1 500 °C sous une lente élévation de la pression de gaz jusqu'à 50 à 300 MPa jusqu'à formation des objets moulés denses, on retire après leur refroidissement les objets de l'autoclave à haute pression et l'on libère les objets de leur enveloppe.

5. Procédé selon les revendications 3 et 4, caractérisé en ce qu'on utilise comme enveloppes préformées des enveloppes en acier.